# EUROPÄISCHE PATENTSCHRIFT

(11) **EP 3 384 184 B1**
(45) Veröffentlichungstag und Bekanntmachung des Hinweises auf die Patenterteilung: **31.03.2021**
(21) Anmeldenummer: 16798521.7
(22) Anmeldetag: 22.11.2016
(51) Int. Cl.: F16H 61/04, F16H 63/18, F16H 61/32, F16H 63/50

(54) **VERFAHREN ZUM SCHALTEN EINES MOTORRADGETRIEBES**
METHOD FOR PERFORMING SHIFTS IN A MOTORCYCLE GEARBOX
PROCÉDÉ DE CHANGEMENT DE VITESSE DANS UNE BOÎTE DE VITESSES DE MOTO

(30) Priorität: 01.12.2015 DE 102015223899
(43) Veröffentlichungstag der Anmeldung: 10.10.2018
(73) Patentinhaber: Bayerische Motoren Werke Aktiengesellschaft, 80809 München (DE)
(72) Erfinder: THOMAS, David, 80333 München (DE); WOLFF, Peter, 81477 München (DE)
(86) Internationale Anmeldenummer: PCT/EP2016/078374
(87) Internationale Veröffentlichungsnummer: WO 2017/093070

(56) Entgegenhaltungen:
- US-A- 5 456 643
- US-A1- 2006 211 536
- US-A1- 2007 243 973
- US-A1- 2015 329 011

## Beschreibung

Die Erfindung betrifft ein Verfahren zum Schalten eines Motorradgetriebes, allgemein sind Verfahren zum automatisierten oder automatischen Schalten eines Motorradgetriebes bekannt, insbesondere aus der EP 1 790 546 A1.

Insbesondere zu Steigerung des Komforts und der Sicherheit kommen in Motorrädern zunehmend automatisch, beziehungsweise automatisiert, schaltende Getriebe zum Einsatz. In Motorädern finden Getriebe mit mehreren achsparallelen Wellen Anwendung, wobei auf diesen achsparallelen Wellen Zahnradpaare zur Kraftübertragung angeordnet sind, welche über Schaltelemente beziehungsweise Kopplungselemente mit Getriebewellen drehmomentleitend verbindbar sind. Zur Aktuierung dieser Schaltelemente ist wenigstens eine drehbare Schaltwelle oder Schaltwalze vorgesehen, durch deren Drehung von einer ersten in eine zweite Position wird ein Gangwechsel in dem Getriebe vom n-ten in den n+1ten Gang oder umgekehrt ausgeführt, dabei ist "erste" Position nicht dahingehend zu verstehen, dass damit der 1. Gang angesprochen wäre, vielmehr beschreibt die erste Position einen Ausgangszustand.

Wird ein derartiges Getriebe automatisiert, so werden die zuvor durch den Fahrer durchgeführten Bedienabläufe automatisiert, beziehungsweise durch Aktuatoren und ein diese steuerndes Verfahren ausgeführt. Für einen Schaltvorgang heißt das, der Verbrennungsmotor wird lastfrei gestellt, um ein Überdrehen des Motors zu verhindern, mittels einer Trennkupplung die als Anfahrelement ausgebildet ist wird zwischen Verbrennungsmotor und Getriebe die Kraftübertragung unterbrochen, in dem dann lastfreien Getriebe wird die gewünschte Gangstufe durch Drehung der Schaltwalze von ihrer Ausgangsposition in eine weitere diskrete Position eingelegt, danach wird die Kupplung wieder geschlossen und zuletzt wird die Verbrennungskraftmaschine wieder durch Aufbauen eines Antriebsdrehmoments beschleunigt.

Die EP 1 790 546 A1 schlägt ein Verfahren zum Schalten eines Motorradgetriebes vor, bei welchem für den Schaltvorgang die zwischen dem Verbrennungsmotor und dem Getriebe angeordnete Kupplung geöffnet und geschlossen wird.

Die US 5 456 643 A befasst sich mit einer Vorrichtung zum Steuern eines Automobilantriebsstrangs. Die US 2015/329011 A1 befasst sich mit einem Elektrofahrzeug. Die US2006/211536 A1 befasst sich mit einem Verfahren zum Steuern eines Antriebsstrangs, welcher eine automatisierte Kupplung aufweist.

Es ist eine Aufgabe der Erfindung ein Verfahren zum Schalten eines Motorradgetriebes mit verbesserter Betriebssicherheit anzugeben. Diese Aufgabe wird durch ein Verfahren gemäß dem ersten Patentanspruch beziehungsweise ein Betriebsverfahren welches wenigstens selektiv dieses Schaltverfahren ausführt gelöst, zu bevorzugende Weiterbildungen der Erfindung sind Gegenstand der abhängigen Ansprüche.

Das Schaltverfahren ist zum Wechseln von Übersetzungsstufen eines Motorradgetriebes vorgesehen. Dabei weist dieses Getriebe eine Vielzahl von Gängen auf, vorzugsweise fünf oder mehr Gänge, bevorzugt sechs oder mehr und besonders bevorzugt sieben oder mehr. Im Sinne der Erfindung ist ein Gang als eine diskrete Übersetzungsstufe zu verstehen und eine Übersetzungsstufe beschreibt insbesondere ein bestimmtes Drehzahlverhältnis einer Getriebeeingangs- zu einer Getriebeausgangswelle. Vorzugsweise ist die Getriebeeingangswelle als die Getriebewelle zu verstehen, auf welche von einem Antriebsmotor eine Antriebsleistung übertagbar ist und vorzugsweise ist eine Getriebeausgangswelle als die Welle zu verstehen von welcher aus die Antriebsleistung an einen Radantrieb, wie vorzugsweise ein Zugmittelgetriebe oder bevorzugt einen Kardanantrieb, weitergegeben wird.

Motorradgetriebe sind insbesondere sequentiell bedienbare, beziehungsweise schaltbare, Getriebe. Um dies zu erreichen weist ein mit dem erfindungsgemäßen Verfahren schaltbares Motoradgetriebe eine durch einen Schaltaktuator drehbare Schaltwalze zum Aktivieren dieser Übersetzungsstufen beziehungsweise Gänge auf. Die Schaltwalze ist drehbar gelagert und bei einer Drehung der Schaltwalze in diskrete Schaltpositionen werden insbesondere über Schaltgabeln, welche mit der Schaltwalze verbindbar oder von dieser ansteuerbar sind, Kopplungseinrichtungen angesteuert, beziehungsweise aktuiert.

Vorzugsweise ist unter einer Kopplungseinrichtung eine Einrichtung zum selektiven Herstellen einer drehmomentleitenden Verbindung zwischen einem Zahn- oder Kettenrad und einer Getriebewelle beziehungsweise zwischen zwei Getriebewellen zu verstehen. Vorzugsweise weist eine Kopplungseinrichtung zum Herstellen dieser Verbindung Reibschlusselement, ein Formschlusselement oder beides auf. Weiter vorzugsweise ist eine Kopplungseinrichtung als eine Kupplung oder Bremse, vorzugsweise mit Reibbelägen, vorzugsweise in Lammellen- oder Trommelbauform oder bevorzugt in Konusbauform ausgebildet.

Weiter vorzugsweise ist eine Kopplungseinrichtung als eine Synchronisierungseinrichtung ausgebildet, welche zunächst eine reibschlüssige Verbindung und danach eine formschlüssige Verbindung herstellt. Weiter vorzugsweise weist die Kopplungseinrichtung Schaltklauen auf oder ist bevorzugt als Schiebemuffe ausgebildet. Derartige Kopplungseinrichtungen sind aus dem Stand der Technik bekannt. Gemeinsam ist derartigen Kopplungseinrichtungen insbesondere, dass beim Betätigen dieser zunächst ein gewisser Weg überbrückt werden muss, in Bezug auf eine Lamellenkupplung ist beispielsweise zunächst das Lüftspiel zu überbrücken, bevor ein Drehmoment übertragbar ist.

Weiter vorzugsweise ist die Antriebsleistung von der Antriebsmaschine, insbesondere von einem Verbrennungsmotor, mittels eines selektiv schaltbaren Anfahrelements übertragbar. Vorzugsweise ist unter einem Anfahrelement eine Einrichtung zu verstehen, mit welcher die Übertragung von Antriebsleistung von der Antriebsmaschine auf die Getriebeeingangswelle selektiv unterbrechbar ist, insbesondere im Stillstand des Fahrzeugs. Vorzugsweise ist ein Anfahrelement als ein Drehmomentwandler und bevorzugt als eine, insbesondere reibschlüssige, Kupplung, besonders bevorzugt als eine Lammellenkupplung ausgebildet.

Wie dargelegt werden einzelne Gänge beziehungsweise Übersetzungsstufen des Motorradgetriebes durch Drehen der Schaltwalze in unterschiedliche, vorbestimmbare Drehstellungen aktiviert. Vorzugsweise ist die Schaltwalze in eine diskrete erste Schaltposition drehbar, in welcher eine erste Übersetzungsstufe aktiviert ist (n-ter Gang). Vorzugsweise ist diese Schaltstufe solange aktiviert oder anders ausgedrückt ist der Gang insbesondere solange eingelegt, bis die Schaltwalze ein bestimmtes Stück aus dieser ersten Schaltposition herausgedreht wird. Weiter vorzugsweise ist die Schaltwalze wenigstens eine andere oder weitere diskrete Schaltposition drehbar, in welcher eine andere Übersetzungsstufe (n+1 oder n-1ter Gang) aktiviert ist.

Das Verfahren zum Wechseln der Übersetzungsstufen für das zuvor beschriebene Motorradgetriebe weist wenigstens folgende Schritte auf:
- Erkennen eines Schaltwunsches,
- Aufrechterhalten der drehmomentleitenden Verbindung zum Übertragen des Antriebsdrehmoments, insbesondere bleibt eine Kupplungseinrichtung, welche in Drehmomentübertragungsrichtung zwischen einer Antriebsmaschine und dem zu steuernden Motorradgetriebe angeordnet ist geschlossen,
- Nach dem Erkennen des Schaltwunsches und bei aufrechterhaltener drehmomentleitender Verbindung, wird das Antriebsdrehmoment der Verbrennungskraftmaschine verringert, insbesondere dadurch ist es erreichbar, dass die Schaltwalze, welche in der Regel aufgrund des Antriebsdrehmoments in der ersten Schaltposition gehalten wird, einfacher bewegbar ist,
- Bewegen der Schaltwalze aus der ersten Schaltposition in eine Zwischenposition, die in Drehrichtung der Schaltwalze zwischen der ersten und der weiteren Schaltposition liegt, wobei in dieser Zwischenposition von der Getriebeeingangswelle auf eine Getriebeausgangswelle kein Antriebsdrehmoment übertragbar ist,
- alternativ kann das Verringern des Antriebsdrehmoments welches von der Antriebsmaschine bereitstellbar ist nach dem Erreichen der Zwischenposition oder zeitgleich mit diesem erfolgen,
- Bewegen der Schaltwalze aus der Zwischenposition in die weitere Schaltposition und damit aktivieren der weiteren Übersetzungsstufe. Vorzugsweise wird das Antriebsdrehmoment der Verbrennungskraftmaschine in Abhängigkeit der Position der Schaltwalze geregelt. Gemäß einer ersten Alternative wird das Antriebsdrehmoment der Verbrennungskraftmaschine verringert, wenn die Schaltwalze die Zwischenposition erreicht hat oder gemäß einer weiteren Alternative geschieht dies noch bevor die Schaltwalze in diese Zwischenposition bewegt wird. Dabei ist in diesem Sinn unter dem Verringern des Antriebsdrehmoments zu verstehen, dass das von der Verbrennungskraftmaschine bereitstellbare Drehmoment verringert wird, anschaulich wird insbesondere die Menge des zugeführten Kraftstoffs verringert, beispielsweise durch Verringern der Öffnung einer Drosselklappe oder Verringern der Einspritzmenge. Durch die Bewegung der Schaltwalze in die Zwischenposition wird insbesondere die Funktion einer Anfahrkupplung, welche zwischen der Verbrennungskraftmaschine und dem Motorradgetriebe angeordnet ist und die bei bekannten Getrieben bei jedem Gangwechsel des Getriebes betätigt wird durch die beschriebene Steuerung der Schaltwalze ersetzt.

Erfindungsgemäß wird noch bevor die Schaltwalze die weitere Schaltposition erreicht hat, also bevor die weitere Übersetzungsstufe aktiviert ist, das Antriebsdrehmoment der Verbrennungskraftmaschine wieder erhöht, vorzugsweise kurz bevor diese weitere Schaltposition erreicht ist. Im Sinne der Erfindung ist und "kurz bevor die weitere Schaltposition" erreicht ist auf den Drehwinkel der Schaltwalze bezogen. Vorzugsweise wird das Antriebsdrehmoment, bezogen auf den Drehwinkel der Schaltwalze 15° oder weniger bevor diese die weitere Schaltposition erreicht hat wieder erhöht, bevorzugt 7,5° oder weniger, besonders bevorzugt 3° oder weniger und ganz besonders bevorzugt 1,5° oder weniger aber noch Erreichen der weiteren Schaltposition der Schaltwalze erhöht.

Insbesondere durch diese Koppelung von Antriebsdrehmoment, beziehungsweise bereitstellbarem Antriebsdrehmoment und Position der Schaltwalze ist ein besonders sicheres Schaltverhalten erreichbar. Vorzugsweise ist der Schaltwunsch durch eine Betätigungseinrichtung, insbesondere ein Fußbetätigung oder vorzugsweise einen Handbetätigbaren Wahlschalter vorgebbar. Weiter vorzugsweise werden Fahrparameter ausgewertet, insbesondere die Antriebsdrehzahl, vorzugsweise der Getriebeeingangswelle und eine Datenverarbeitungseinrichtung, vorzugsweise ein Steuergerät, gibt einen Schaltwunsch aufgrund dieser Fahrparameter automatisiert vor.

Vorzugsweise wird nach dem Erkennen des Schaltwunsches bei geschlossenem Anfahrelement die Schaltwalze in eine Zwischenposition gedreht, vorzugsweise ist während dieser Drehung der Schaltwalze das von der Verbrennungskraftmaschine abgebbare Antriebsdrehmoment verringert. Vorzugsweise ist die Zwischenposition derart gewählt, dass diese in Drehrichtung zwischen zwei Schaltpositionen liegt, also zwischen der Schaltposition in welcher der im Augenblick der Erkennung des Schaltwunsches aktivierte Gang eingelegt ist (erste Schaltposition) und der Schaltposition, in welcher der Gang aktiviert ist, welcher nach dem Wechsel der Übersetzungsstufe eingelegt ist (andere oder weitere Schaltposition).

Dabei hängt die Strecke zwischen diesen zwei Schaltpositionen insbesondere von der Konstruktion des Getriebes ab, vorzugsweise wenigstens von der Anzahl der schaltbaren Übersetzungsstufen. Die Zwischenposition ist derart gewählt, dass diese zwischen der ersten Schaltposition und der weiteren Schaltposition liegt und, dass die erste Übersetzungsstufe in der Zwischenposition nicht mehr und die weitere Übersetzungsstufe noch nicht aktiviert ist. In diesem Zustand ist insbesondere kein Drehmoment von der Getriebeeingangswelle auf die Getriebeausgangswelle übertragbar.

Vorzugsweise liegt die Zwischenposition, wenigstens in etwa, symmetrisch zwischen den beiden zuvor genannten Schaltpositionen. Insbesondere durch das Ansteuern der Zwischenposition wird der Kraftfluss von der Antriebsmaschine, welche mit der Getriebeeingangswelle drehmomentleitend gekoppelt bleibt, und der Getriebeausgangswelle planmäßig unterbrochen, ohne dass dazu das Anfahrelement geöffnet werden muss.

Vorzugsweise gleichzeitig, bevorzugt nach dem Anfahren der Zwischenposition und besonders bevorzugt davor, wird das Antriebsdrehmoment der Antriebsmaschine durch einen Steuerbefehl verringert. Insbesondere durch diesen Steuerbefehl ist vermeidbar, dass die Antriebsmaschine in quasi lastfreien Zustand, hochdreht.

Vorzugsweise wird die Schaltwalze derart gesteuert, dass diese, wenigstens kurzzeitig, in der Zwischenposition verharrt, bevorzugt bewegt sich die Schaltwalze nach dem Verlassen der ersten Schaltposition, mit einer geringen Geschwindigkeit, wenigstens im Bereich der Zwischenposition. Vorzugsweise ist unter einer geringen Geschwindigkeit eine Geschwindigkeit der Schaltwalze zu verstehen, welche geringer ist, als in einem anderen Bereich der Bewegung der Schaltwalze von der ersten Schaltposition in die weitere Schaltposition. Insbesondere ist mit einer derart geringen Geschwindigkeit das Anhalten der Schaltwalze vermeidbar und die Steuerbarkeit dieser ist verbesserbar.

Vorzugsweise wird, nachdem die Schaltwalze die Zwischenposition erreicht hat die Schaltwalze aus der Zwischenposition in die zweite diskrete Schaltposition bewegt und damit wird die weitere Schaltstufe aktiviert. Vorzugsweise ist die Zwischenposition auf der Grundlage der mechanischen Aktuierung der Kopplungseinrichtungen berechenbar oder weiter vorzugsweise durch Versuche ermittelbar.

Insbesondere mit dieser Art der Steuerung beim Wechsel der Übersetzungsstufen ist es ermöglicht, einen solchen Wechsel ohne Öffnen und Schließen des Anfahrelements und damit vorzugsweise in besonders kurzer Zeit herbeizuführen. Weiter vorzugsweise ist dadurch die Lebensdauer des Anfahrelements verlängerbar und damit die Betriebssicherheit des Motorradgetriebes erhöhbar.

In einer bevorzugten Ausführungsform wird die Schaltwalze zunächst, vorzugsweise bevor diese in die Zwischenposition bewegt wird, und weiter vorzugsweise nachdem der Schaltwunsch erkannt ist, in eine Anlageposition bewegt.

Vorzugsweise ist die Anlageposition derart gewählt, dass diese bezogen auf den Drehweg der Schaltwalze von der ersten Schaltposition zur weiteren Schaltposition nach der ersten Schaltposition und vor der Zwischenposition liegt. Weiter vorzugsweise ist in der Anlageposition, im Gegensatz zur Zwischenposition, ein Antriebsdrehmoment von der Getriebeeingangswelle auf die Getriebeausgangswelle übertragbar. Vorzugsweise ist die Anlageposition derart gewählt, dass in dieser Spiele in der mechanischen Aktuierung des Getriebes verringert sind, insbesondere wird das System durch das Anfahren der Anlageposition vorgespannt, da diese näher an der weiteren Schaltposition liegt als die erste Schaltposition eine Drehmomentübertragung durch das Getriebe aber noch ermöglicht ist.

Vorzugsweise ist die Anlageposition bei Kenntnis der Hebel- und Toleranzverhältnisse sowie der Systemsteifigkeiten berechenbar oder abschätzbar, weiter vorzugsweise ist die Anlageposition durch Versuche ermittelbar. Insbesondere durch Anfahren einer Anlageposition, in welcher das mechanische System zum Aktuieren der Kopplungseinrichtungen vorgespannt wird, ist die Zeit zum Wechseln der Übersetzungsstufen verkürzbar und damit der Fahrkomfort erhöhbar.

In einer bevorzugten Ausführungsform ist der Schaltwunsch durch den Fahrer manuell vorgebbar, vorzugsweise durch einen fuß- oder handbetätigbaren Wahlschalter. Weiter vorzugsweise ist der Schaltwunsch durch eine Datenverarbeitungseinrichtung vorgebbar, insbesondere in einem Automatikfahrmodus, in welchem der Wechsel der Schaltstufen insbesondere aufgrund der Fahrgeschwindigkeit und der Drehzahl der Antriebsmaschine erfolgt. Weiter vorzugsweise sind zum Erkennen des Schaltwunsches weitere Fahrparameter herangezogen. Vorzugsweise können solche weiteren Fahrparameter die Beschleunigung des Fahrzeugs, die Stellung des Gas- beziehungsweise Beschleunigungsgriffes oder weiter vorzugsweise die Stellung eine Fahrmodischalters (Sport, Komfort, Eco oder dergleichen) sein.

Vorzugsweise sieht ein Betriebsverfahren für ein Motorradgetriebe wenigstens zwei Schaltverfahren vor, von welchen eines das zuvor beschriebene erfinderische Schaltverfahren ist und ein weiteres Schaltverfahren ein von diesem abweichendes Schaltverfahren ist.

Weiter vorzugsweise werden diese Schaltverfahren in Abhängigkeit wenigstens eines Fahrzustandsparameters selektiv ausgeführt. Insbesondere durch 2 unterschiedliche Schaltverfahren welche in Abhängigkeit von wenigstens einem Fahrzustandsparameters ausführbar sind ist ein besonders komfortabel betreibbares Motorradgetriebe darstellbar. Vorzugsweise kann bei dem zweiten Schaltverfahren vorgesehen sein, dass zum Wechseln der Übersetzungsstufen insbesondere das Anfahrelement geöffnet wird oder das vorzugsweise die Schaltwalze in keine Zwischenposition bringbar ist, insbesondere das die Schaltwalze diese Zwischenposition mit hoher Geschwindigkeit überfährt, um möglichst kurz zwischen der ersten Schaltposition und der weiteren Schaltposition zu verweilen.

In einer bevorzugten Ausführungsform wird zur Bestimmung des Fahrzustandsparameters wenigstens einer der nachfolgend genannten Parameter herangezogen:
- Beschleunigungsvorgabe des Fahrers, insbesondere Gasgriffstellung,
- momentane Fahrzeuggeschwindigkeit,
- momentane Fahrzeugbeschleunigung,
- momentan gewählte Übersetzungsstufe,
- Art des Wechsels der Übersetzungsstufe, insbesondere Hoch- oder Rückschaltung,
- Bremsbetätigung,
- Stellung des Fahrmoduswahlschalters.

Insbesondere durch die Abhängigkeit davon welches der wenigstens 2 Schaltverfahren ausgeführt wird von einem der zuvor genannten Parameter hat gezeigt, dass dadurch ein besonders komfortabel schaltendes Motorradgetriebe darstellbar ist.

In einer bevorzugten Ausführungsform weist das zweite Schaltverfahren, also insbesondere das nicht dem zuvor beschriebenen Schaltverfahren entsprechende Schaltverfahren, die Schritte auf:
- Erkennen eines Schaltwunsches,
- Aufrechterhalten eine drehmomentleitende Verbindung zwischen der Antriebswelle des Antriebsmotors und der Getriebeeingangs Welle,
- Verringern des Antriebsdrehmoments,
- Bewegen der Schaltwalze aus der ersten Schaltposition in die weitere Schaltposition und damit aktivieren der weiteren Übersetzungsstufe. Insbesondere bei diesem zweiten Schaltverfahren wird die Schaltwalze ohne anfahren der Zwischenposition von der ersten Schaltposition in die weitere Schaltposition bewegt.

Vorzugsweise wird ein derartiges zweites Schaltverfahren insbesondere für sogenannte Zug-Hochschaltungen verwendet. Derartige Zug-Hochschaltungen sind insbesondere dadurch gekennzeichnet, dass das Fahrzeug beschleunigt wird, weiter vorzugsweise wird ein derartiges Verfahren zum Erreichen sehr kurzer Schaltzeiten eingesetzt. Untersuchungen haben gezeigt, dass insbesondere bei Zug-Hochschaltungen der Wechsel der Übersetzungsstufen auch ohne das Anfahren einer Zwischenposition besonders schnell erfolgen kann. Derartige Zug-Hochschaltungen für sich sind aus dem Stand der Technik bekannt.

In einer bevorzugten Ausführungsform in einer bevorzugten Ausführungsform ist auch in dem zweiten Schaltverfahren die Schaltwalze beim Wechseln der Übersetzungsstufe zunächst in eine Anlageposition bewegbar. Dabei entspricht diese Anlageposition des zweiten Schaltverfahrens, der für das erfindungsgemäße Schaltverfahren beschriebenen Anlageposition, und dient insbesondere der Beschleunigung beim Wechseln der Übersetzungsstufe. Diese Beschleunigung ist insbesondere dadurch erreichbar, da der Drehweg der Schaltwalze aus der Anlageposition bis zur weiteren Schaltposition verkürzt ist gegenüber dem Drehweg von der ersten Schaltposition zur weiteren Schaltposition.

Vorzugsweise ist diese Anlageposition in Drehrichtung der Schaltwalze zwischen der ersten Schaltposition, also der Schaltposition in welcher ein Antriebsdrehmoment von der Getriebeeingangswelle auf die Getriebe Ausgangswelle übertragbar ist und in welcher die erste Übersetzungsstufe aktiviert ist. Und der weiteren Schaltposition in welcher die Übersetzungsstufe aktiviert ist die aufgrund des erkannten Schaltwunsches eingelegt werden soll. Dabei ist die Anlageposition bezogen auf den Drehweg der Schaltwalze zwischen der ersten Schaltposition und der weiteren Schaltposition vorzugsweise näher an der ersten Schaltposition gelegen und weiter vorzugsweise dadurch gekennzeichnet dass ein Antriebsdrehmoment von der Getriebeeingangswelle auf die Getriebeausgangswelle übertragbar ist.

Bekannte automatisiert schaltende Motorradgetriebe sind als Doppelkupplungsgetriebe ausgebildet, diese sind sehr aufwändig oder sie sind als herkömmliche Motorradgetriebe mit Schaltwalze ausgebildet, wobei die Anfahrkupplung und die Position der Schaltwalze durch eine Steuerung und motorische Aktuatoren gesteuert werden. Durch das vorgeschlagene Verfahren ist es ermöglicht, ein herkömmliches Motorradgetriebe mit Schaltwalze zu automatisieren, ohne dass dazu die Anfahrkupplung mit einem Aktuator ausgeführt sein muss, da die zum Gangwechsel notwendige Unterbrechung der drehmomentleitenden Verbindung durch das Anfahren der Zwischenposition der Schaltwalze realisiert wird.

Nachfolgend sind Merkmale und Ausführungsformen der Erfindung in schematisierter Art und Weise dargestellt. Dabei zeigt:
- Figur 1:: einen Ablaufplan für ein Schaltverfahren mit Einnehmen einer Zwischenposition der Schaltwalze,
- Figur 2:: einen Ablaufplan für ein Betriebsverfahren für ein Motorradgetriebe mit 2 unterschiedlichen Schaltverfahren, welche selektiv in Abhängigkeit von einem Fahrzustandsparameter ausführbar sind.

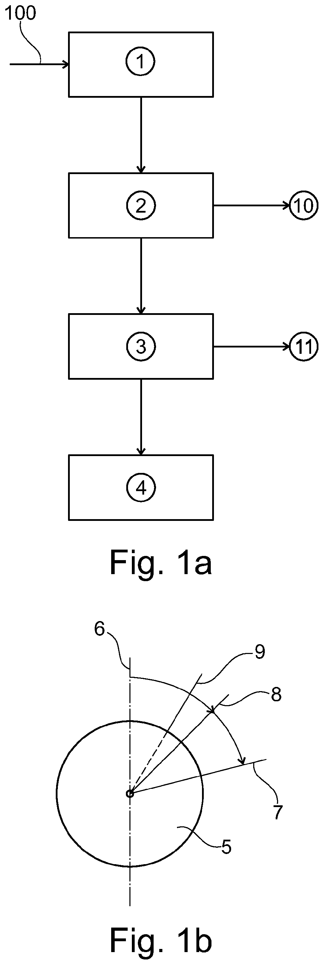

Figur 1a zeigt einen schematisierten Ablaufplan für ein Schaltverfahren sowie die Winkelpositionen welche eine Schaltwalze 5 beim Ausführen dieses Schaltverfahrens einnimmt, Figur 1b.

Wird ein Schaltwunsch 100 erkannt, so wird in einem ersten Verfahrensschritt 1 die Schaltwalze 5 aus der ersten Schaltposition 6, in welcher die erste Übersetzungsstufe aktiviert ist, in die Zwischenposition 8 überführt, bei diesem Überführen ist insbesondere das von der Verbrennungskraftmaschine abgebbare Antriebsdrehmoment verringert. Gleichzeitig wird im zweiten Verfahrensschritt 2 die drehmomentleitende Verbindung von der Antriebswelle der Antriebsmaschine zur Getriebe Eingangswelle aufrechterhalten, Kupplung bleibt geschlossen. Dies kann über einen eigenen Steuerbefehl 10 geschehen oder es wird kein Befehl zum Unterbrechen der drehmomentleitende in Verbindung ausgegeben.

Im dritten Verfahrensschritt 3, dabei kann dieser Verfahrensschritt 3 auch unmittelbar nach dem Erkennen des Schaltwunsches 100 ausgeführt werden, also noch bevor die Schaltwalze 5 aus der ersten Schaltposition 6 bewegt wird, wird beim Erreichen der Zwischenposition 8 über einen Steuerbefehl 11 das Antriebsdrehmoment der Antriebsmaschine verringert und so das lastfrei Hochdrehen dieser vermieden. Im vierten Verfahrensschritt 4, wird die Schaltwalze 5 von der Zwischenposition 8 in die weitere Schaltposition 7 überführt, in welcher die Übersetzungsstufe, in welche aufgrund des Schaltwunsches gewechselt wird, aktiviert ist.

Wie dargelegt kann die Schaltwalze 5 aus ihrer ersten Schaltposition 6 zunächst in eine Anlageposition 9 gebracht werden, welche bezogen auf den Drehweg der Schaltwalze 5 zwischen der ersten Schaltposition 6 und der Zwischenposition 8 der Schaltwalze 5 liegt. Dabei zeichnet sich die Anlageposition 9 gegenüber der Zwischenposition 8 dadurch aus, dass in der Anlageposition von der Getriebeeingangswelle auf die Getriebe Ausgangswelle ein Drehmomentübertragbar ist jedoch ist auch in Figur 1 B erkennbar dass durch die Anlageposition 9 der Drehweg zum Erreichen der weiteren Schaltposition 7 verkürzt ist und somit besonders schnelle Schaltvorgänge, welche für den Benutzer des Motorradgetriebes besonders komfortabel erscheinen ausführbar sind. Im Verfahrensschritt 4 ist auch vorgesehen das Antriebsmoment der Antriebsmaschine wieder anzuheben.

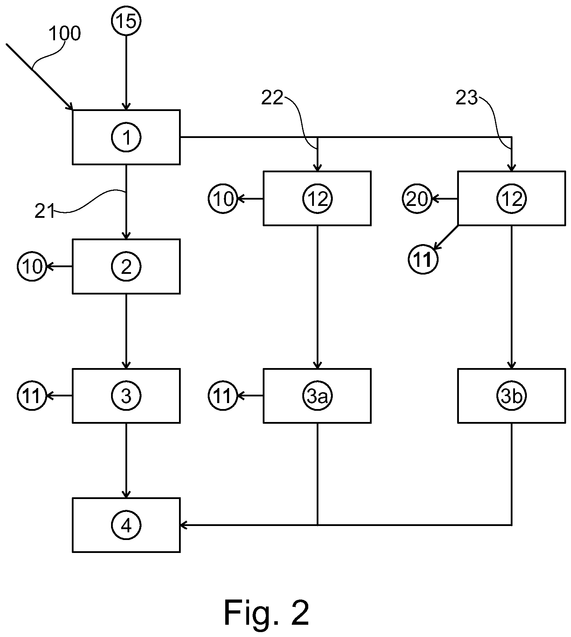

In Figur 2 ist ein schematisierter Ablaufplan für ein Betriebsverfahren mit mehreren unterschiedlichen Schaltverfahren dargestellt. Dabei werden die unterschiedlichen Schaltverfahren aufgrund eines Fahrzustandsparameters 15 selektiv ausgeführt. Eines dieser Schaltverfahren das bereits in Figur 1a und Figur 1b dargestellte Schaltverfahren und wird nachfolgend nicht mehr erläutert.

Wird aufgrund des Fahrzustandsparameters 15 der Pfad 22 gewählt so wird die Schaltwalze (nicht dargestellt) in einem Verfahrensschritt 12 aus der ersten Schaltposition in eine Anlageposition überführt und ein Steuerbefehl 10 zum Aufrechterhalten der Drehmomentübertragung des Anfahrelements (nicht dargestellt) wird ausgegeben bzw. wird kein Befehl zum Unterbrechen dieser Drehmomentübertragung ausgegeben.

Danach wird die Schaltwalze in einem Verfahrensschritt 3a aus der Anlageposition in Richtung zur weiteren Schaltposition bewegt, während dieser Bewegung der Schaltwalze kann über den Steuerbefehl 11 das Antriebsdrehmoment der Antriebsmaschine beeinflusst werden, also vorzugsweise erhöht oder bevorzugt verringert werden. Eine solche Beeinflussung kann, bezogen auf eine Verbrennungskraftmaschine, durch eine Verringerung der Menge des zugeführten Brennstoffs oder eine Unterbrechung der Zündung erfolgen. Im Verfahrensschritt 4 wird die Schaltwalze in die weitere Schaltposition gebracht und damit ist die weitere Übersetzungsstufe aktiviert.

Weiter kann auch ein drittes Schaltverfahren vorgesehen sein, welches selektiv über den Fahrzustandsparameter 15 ausführbar ist. Zunächst wird die Schaltwalze im Verfahrensschritt 12 in die Anlageposition gebracht und es wird ein Steuerbefehl 20 zum Öffnen des Anfahrelements, also der Trennkupplung zwischen Antriebsmaschine und Motorradgetriebe ausgegeben. Weiter wird ein Steuerbefehl 11 ausgegeben welcher die Verringerung des Antriebsdrehmoments der Antriebsmaschine bewirkt.

Im Verfahrensschritt 3b wird die Schaltwalze aus der Anlageposition in Richtung der weiteren Schaltposition bewegt. Im Verfahrensschritt 4 hat die Schaltwalze die weitere Schaltposition erreicht und der aufgrund des Schaltwunsches einzulegende Gang ist aktiviert.

## Patentansprüche

1. Schaltverfahren zum Wechseln von Übersetzungsstufen eines Motorradgetriebes, wobei dieses Getriebe eine Vielzahl von diskreten Übersetzungsstufen zum Verändern des Drehzahlverhältnisses einer Getriebeeingangs- zu einer Getriebeausgangswelle und
eine durch einen Schaltaktuator drehbare Schaltwalze zum Aktivieren dieser Übersetzungsstufen aufweist,
wobei zur drehmomentleitenden Verbindung einer Antriebswelle einer Verbrennungskraftmaschine mit der Getriebeeingangswelle eine selektiv schaltbare Kupplung zur Übertagung eines Antriebsdrehmoments vorgesehen ist,
dabei ist die Schaltwalze in eine diskrete erste Schaltposition drehbar, in welcher eine erste Übersetzungsstufe aktiviert ist und in wenigstens eine andere diskrete Schaltposition, in welcher eine andere Übersetzungsstufe aktiviert ist,
wobei dieses Verfahren die Schritte aufweist:
- Erkennen eines Schaltwunsches (100),
- Aufrechterhalten der drehmomentleitenden Verbindung zum Übertragen des Antriebsdrehmoments,
- Verringern der Antriebsdrehmoments der Verbrennungskraftmaschine,
- Bewegen der Schaltwalze aus der ersten Schaltposition (6) in eine Zwischenposition (8), die in Drehrichtung der Schaltwalze (5) zwischen der ersten und der weiteren Schaltposition liegt, wobei in dieser Zwischenposition (8) von der Getriebeeingangswelle auf eine Getriebeausgangswelle kein Antriebsdrehmoment übertragbar ist,
- Bewegen der Schaltwalze aus der Zwischenposition (8) in die weitere Schaltposition (7) und damit aktivieren der weiteren Übersetzungsstufe und wobe das Verfahren **dadurch gekennzeichnet ist, daß** das Antriebsdrehmoment der Verbrennungskraftmaschine, bezogen auf den Drehwinkel der Schaltwalze (5), 15° oder weniger aber noch bevor die Schaltwalze die weitere Schaltposition (7) erreicht hat, wieder erhöht wird.

2. Verfahren nach Anspruch 1, **dadurch gekennzeichnet, dass** die Schaltwalze (5) aus der ersten Schaltposition (6) in eine Anlageposition (9) bewegt wird,
dass diese Anlageposition (9) in Drehrichtung der Schaltwalze (5) zwischen der ersten Schaltposition (6) und der Zwischenposition (8) liegt,
dass in dieser Anlageposition (9) eine Übertragung von Antriebsdrehmoment von der Getriebeeingangswelle auf die Getriebeausgangswelle ermöglicht ist.

3. Schaltverfahren nach einem der vorhergehenden Ansprüche, **dadurch gekennzeichnet, dass**
der Schaltwunsch durch den Fahrzeugführer manuell vorgebbar ist.

4. Schaltverfahren nach einem der vorhergehenden Ansprüche,
**dadurch gekennzeichnet, dass**
der Schaltwunsch automatisiert vorgebbar ist, dass zum Ermitteln eines Schaltwunsches wenigstens einer der nachfolgenden Parameter herangezogen wird
- aktuelle Fahrzeuggeschwindigkeit,
- Drehzahl der Getriebeeingangswelle.

5. Betriebsverfahren für ein Motorradgetriebe mit einem Schaltverfahren nach einem der vorhergehenden Ansprüche, **dadurch gekennzeichnet, dass**
dieses Schaltverfahren und wenigstens ein weiteres Schaltverfahren selektiv in Abhängigkeit von einem Fahrzustandsparameter ausführbar sind.

6. Betriebsverfahren nach 5, **dadurch gekennzeichnet, dass** zur Bestimmung des Fahrzustandsparameters wenigstens einer der nachfolgend genannten Parameter herangezogen wird:
- Beschleunigungsvorgabe des Fahrers, insbesondere Gasgriffstellung,
- momentane Fahrzeuggeschwindigkeit,
- momentane Fahrzeugbeschleunigung,
- momentan gewählte Übersetzungsstufe,
- Art des Wechsels der Übersetzungsstufe, insbesondere Hochschaltung oder Rückschaltung,
- Bremsbetätigung
- Fahrmoduswahlschalter.

7. Betriebsverfahren nach einem der Ansprüche 5 oder 6, **dadurch gekennzeichnet, dass**
ein erstes weiteres Schaltverfahren,
wenigstens folgende Schritte umfasst:
- Erkennen eines Schaltwunsches,
- Unterbrechen der drehmomentleitende Verbindung zwischen dem Antriebsmotor und der Getriebeeingangswelle, so dass von der Antriebswelle kein Antriebsdrehmoment auf die Getriebeeingangswelle übertragbar ist,
- Verringern des von der Abtriebswelle abgebbaren Antriebsdrehmoments,
- Bewegen der Schaltwalze von der ersten Schaltposition in die andere Schaltposition,
- Herstellen der drehmomentleitenden Verbindung zwischen Antriebsmotor und Getriebeeingangswelle.

8. Betriebsverfahren nach einem der Ansprüche 5 oder 7, **dadurch gekennzeichnet, dass**
ein zweites weiteres Schaltverfahren,
wenigstens folgende Schritte umfasst:
- Erkennen eines Schaltwunsches,
- Aufrechterhalten einer drehmomentleitenden Verbindung zwischen einer Antriebswelle des Antriebsmotors und der Getriebeeingangswelle,
- Verringern des Antriebsdrehmoments,
- Bewegen der Schaltwalze aus der ersten Schaltposition in die weitere Schaltposition und damit aktivieren der weiteren Übersetzungsstufe.

9. Betriebsverfahren nach Anspruch 8, **dadurch gekennzeichnet, dass** die Schaltwalze aus der ersten Schaltposition in eine Anlageposition bewegt wird,
dass diese Anlageposition in Drehrichtung der Schaltwalze zwischen der ersten Schaltposition und der weiteren Schaltposition liegt, dass in dieser Anlageposition eine Übertragung von Antriebsdrehmoment von der Getriebeeingangswelle auf die Getriebeausgangswelle ermöglicht ist.

10. Motorradgetriebe, welches wenigstens zeitweise mit einem Schaltverfahren nach einem der Ansprüche 1 bis 4 betrieben wird.

## Claims

1. Shifting method for changing transmission stages of a motorcycle transmission, the said transmission having a multiplicity of discrete transmission stages for changing a rotational speed ratio of a transmission input shaft to a transmission output shaft, and a gear-shifting drum which can be rotated by way of a shifting actuator for activating the said transmission stages, a selectively switchable clutch for the transmission of a drive torque being provided for the torque-conducting connection of a drive shaft of an internal combustion engine to the transmission input shaft, it being possible for the gear-shifting drum to be rotated into a discrete first shifting position, in which a first transmission stage is activated, and into at least one other discrete shifting position, in which another transmission stage is activated, the said method having the following steps:
- detecting of a shifting request (100),
- maintaining of the torque-conducting connection for the transmission of the drive torque,
- decreasing of the drive torque of the internal combustion engine,
- moving of the gear-shifting drum from the first shifting position (6) into an intermediate position (8) which lies between the first and the further shifting position in the rotational direction of the gear-shifting drum (5), it not being possible for any drive torque to be transmitted from the transmission input shaft to a transmission output shaft in the said intermediate position (8),
- moving of the gear-shifting drum from the intermediate position (8) into the further shifting position (7) and, in this way, activating of the further transmission stage, and the method being **characterized in that** the drive torque of the internal combustion engine is increased again 15° or less in relation to the rotational angle of the gear-shifting drum (5), but still before the gear-shifting drum has reached the further shifting position (7).

2. Method according to Claim 1, **characterized in that** the gear-shifting drum (5) is moved from the first shifting position (6) into a contact position (9), **in that** the said contact position (9) lies between the first shifting position (6) and the intermediate position (8) in the rotational direction of the gear-shifting drum (5), and **in that** a transmission of drive torque from the transmission input shaft to the transmission output shaft is made possible in the said contact position (9).

3. Shifting method according to either of the preceding claims, **characterized in that** the shifting request can be specified manually by way of the vehicle driver.

4. Shifting method according to one of the preceding claims, **characterized in that** the shifting request can be specified in an automated manner, and **in that**, in order to determine a shifting request, at least one of the following parameters is used:
- current vehicle speed,
- rotational speed of the transmission input shaft.

5. Operating method for a motorcycle transmission with a shifting method according to one of the preceding claims, **characterized in that** the said shifting method and at least one further shifting method can be carried out selectively in a manner which is dependent on a driving state parameter.

6. Operating method according to Claim 5, **characterized in that**, in order to determine the driving state parameter, at least one of the parameters mentioned below is used:
- acceleration specification of the driver, in particular throttle grip position,
- instantaneous vehicle speed,
- instantaneous vehicle acceleration,
- instantaneously selected transmission stage,
- type of the change of the transmission stage, in particular upshift or downshift,
- brake actuation
- driving mode selector switch.

7. Operating method according to either of Claims 5 and 6, **characterized in that** a first further shifting method comprises at least the following steps:
- detecting of a shifting request,
- interrupting of the torque-conducting connection between the drive engine and the transmission input shaft, with the result that drive torque cannot be transmitted from the drive shaft to the transmission input shaft,
- decreasing of the drive torque which can be output by the output shaft,
- moving of the gear-shifting drum from the first shifting position into the other shifting position,
- establishing of the torque-conducting connection between the drive engine and transmission input shaft.

8. Operating method according to either of Claims 5 and 7, **characterized in that** a second further shifting method comprises at least the following steps:
- detecting of a shifting request,
- maintaining of a torque-conducting connection between a drive shaft of the drive engine and the transmission input shaft,
- decreasing of the drive torque,
- moving of the gear-shifting drum from the first shifting position into the further shifting position and, in this way, activating of the further transmission stage.

9. Operating method according to Claim 8, **characterized in that** the gear-shifting drum is moved from the first shifting position into a contact position, **in that** the said contact position lies between the first shifting position and the further shifting position in the rotational direction of the gear-shifting drum, and **in that** a transmission of drive torque from the transmission input shaft to the transmission output shaft is made possible in the said contact position.

10. Motorcycle transmission which is operated at least temporarily by way of a shifting method according to one of Claims 1 to 4.

## Revendications

1. Procédé de changement de vitesse pour changer les rapports de transmission d'une boîte de vitesses de moto, cette boîte de vitesses présentant une pluralité de rapports de transmission distincts pour modifier le rapport de vitesse de rotation entre un arbre d'entrée de boîte de vitesses et un arbre de sortie de boîte de vitesses et un tambour de sélection pouvant être amené à tourner par un actionneur de sélection pour activer lesdits rapports de transmission,
dans lequel, pour la liaison avec transmission de couple entre un arbre d'entraînement d'un moteur à combustion interne et l'arbre d'entrée de boîte de vitesses, un embrayage pouvant être commuté sélectivement est prévu pour transmettre un couple d'entraînement,
le tambour de sélection pouvant être tourné vers une première position de sélection distincte dans laquelle un premier rapport de transmission est activé et vers au moins une autre position de sélection distincte dans laquelle un autre rapport de transmission est activé,
ledit procédé comprenant les étapes consistant à :
- reconnaître un souhait de changement de vitesse (100),
- maintenir la liaison avec transmission de couple pour transmettre le couple d'entraînement,
- diminuer le couple d'entraînement du moteur à combustion interne,
- déplacer le tambour de sélection de la première position de sélection (6) à une position intermédiaire (8) qui se trouve entre la première et l'autre position de sélection dans le sens de rotation du tambour de sélection (5), aucun couple d'entraînement ne pouvant être transmis de l'arbre d'entrée de boîte de vitesses à un arbre de sortie de boîte de vitesses dans cette position intermédiaire (8),
- déplacer le tambour de sélection de la position intermédiaire (8) à l'autre position de sélection (7), et donc activer l'autre rapport de transmission, et
le procédé étant **caractérisé en ce que** le couple d'entraînement du moteur à combustion interne, par rapport à l'angle de rotation du tambour de sélection (5), est égal à 15° ou moins, mais est à nouveau augmenté avant même que le tambour de sélection ait atteint l'autre position de sélection (7).

2. Procédé selon la revendication 1, **caractérisé en ce que**
le tambour de sélection (5) est déplacé de la première position de sélection (6) à une position d'appui (9),
cette position d'appui (9) entre la première position de sélection (6) et la position intermédiaire (8) se trouve dans le sens de rotation du tambour de sélection (5),
dans cette position d'appui (9), une transmission du couple d'entraînement de l'arbre d'entrée de boîte de vitesses à l'arbre de sortie de boîte de vitesses est rendue possible.

3. Procédé de changement de vitesse selon l'une quelconque des revendications précédentes, **caractérisé en ce que** le souhait de changement de vitesse peut être spécifié manuellement par le conducteur.

4. Procédé de changement de vitesse selon l'une quelconque des revendications précédentes, **caractérisé en ce que** le souhait de changement de vitesse peut être spécifié de manière automatisée, au moins l'un des paramètres suivants étant utilisé pour établir un souhait de changement de vitesse
- la vitesse actuelle du véhicule,
- la vitesse de rotation de l'arbre d'entrée de boîte de vitesses.

5. Procédé d'exploitation pour une boîte de vitesses de moto par un procédé de changement de vitesse selon l'une quelconque des revendications précédentes, **caractérisé en ce que** ledit procédé de changement de vitesse et au moins un autre procédé de changement de vitesse peuvent être exécutés sélectivement en fonction d'un paramètre d'état de conduite.

6. Procédé d'exploitation selon la revendication 5, **caractérisé en ce que** pour la détermination du paramètre d'état de conduite, au moins l'un des paramètres cités ci-après est utilisé :
- une spécification d'accélération du conducteur, en particulier une position de poignée des gaz,
- la vitesse actuelle du véhicule,
- l'accélération actuelle du véhicule,
- le rapport de transmission sélectionné actuellement,
- le type de changement du rapport de transmission, en particulier un passage à une vitesse supérieure ou inférieure,
- un actionnement du frein
- un sélecteur de mode de conduite.

7. Procédé d'exploitation selon l'une quelconque des revendications 5 et 6, **caractérisé en ce qu'**un premier autre procédé de changement de vitesse comprend au moins les étapes suivantes consistant à :
- reconnaître un souhait de changement de vitesse,
- interrompre la liaison avec transmission de couple entre le moteur d'entraînement et l'arbre d'entrée de boîte de vitesses de sorte qu'aucun couple d'entraînement ne peut être transmis par l'arbre d'entraînement à l'arbre d'entrée de boîte de vitesses,
- diminuer le couple d'entraînement pouvant être fourni par l'arbre entraîné,
- déplacer le tambour de sélection de la première position de sélection à l'autre position de sélection,
- établir la liaison avec transmission de couple entre le moteur d'entraînement et l'arbre d'entrée de boîte de vitesses.

8. Procédé d'exploitation selon l'une quelconque des revendications 5 et 7, **caractérisé en ce qu'**un deuxième autre procédé de changement de vitesse comprend au moins les étapes suivantes consistant à :
- reconnaître un souhait de changement de vitesse,
- maintenir une liaison avec transmission de couple entre un arbre d'entraînement du moteur d'entraînement et l'arbre d'entrée de boîte de vitesses,
- diminuer le couple d'entraînement,
- déplacer le tambour de sélection de la première position de sélection à l'autre position de sélection, et donc activer l'autre rapport de transmission.

9. Procédé d'exploitation selon la revendication 8, **caractérisé en ce que**
le tambour de sélection est déplacé de la première position de sélection à une position d'appui,
cette position d'appui se trouve entre la première position de sélection et l'autre position de sélection dans le sens de rotation du tambour de sélection,
dans cette position d'appui, une transmission de couple d'entraînement de l'arbre d'entrée de boîte de vitesses à l'arbre de sortie de boîte de vitesses est rendue possible.

10. Boîte de vitesses de moto, qui est exploitée au moins temporairement par un procédé de changement de vitesse selon l'une quelconque des revendications 1 à 4 .
